# FASCICULE DE BREVET EUROPEEN

(11) **EP 1 123 779 B1**
(45) Date de publication et mention de la délivrance du brevet: **15.11.2006**
(21) Numéro de dépôt: 01400326.3
(22) Date de dépôt: 09.02.2001
(51) Int. Cl.: B25B 5/12, B23B 31/18

(54) **Dispositif de centrage et de serrage, notamment de pièces pour carrosserie automobile**
Vorrichtung zum Zentrieren und Spannen, vorzugsweise von Fahrzeugkarosserie Teilen
Device for centering and clamping, especially for pieces of vehicle bodies

(30) Priorité: 11.02.2000 FR 0001712
(43) Date de publication de la demande: 16.08.2001
(73) Titulaire: Genus Technologies, 91570 BIEVRES (FR)
(72) Inventeur: Morel, Michel, 95120 Ermont (FR); Roudier, Fabrice, 78820 Juziers (FR)
(74) Mandataire: Kaspar, Jean-Georges

(56) Documents cités:
- EP-A- 0 243 599
- EP-A- 0 348 802
- EP-A- 0 919 338
- EP-A- 0 976 482
- FR-A- 2 755 049
- FR-A- 2 776 858
- FR-A- 2 781 176

## Description

L'invention est relative à un dispositif de centrage, de positionnement ou de serrage, notamment pour pièce de carrosserie automobile, du type comportant un corps contenant un moyen d'actionnement et supportant des moyens de centrage, de positionnement ou de serrage, voir par exemple le document FR-A-2 755 049.

Il est connu d'utiliser dans la technique considérée un moyen d'actionnement constitué par un vérin hydraulique, un vérin pneumatique, un vérin électrique ou un autre moyen d'actionnement à distance pouvant transmettre des efforts au moyen d'un câble ou autre lien souple approprié.

Il est également connu d'utiliser dans la technique considérée des moyens de centrage, de positionnement ou de serrage, pour positionner une pièce, notamment une tôle de carrosserie, en prévoyant un orifice de positionnement dans cette tôle de carrosserie ou cette pièce de construction automobile, et en insérant au moins une extrémité du moyen de positionnement ou de centrage dans cet orifice de positionnement.

Il est également connu d'utiliser des moyens de centrage, de positionnement, de serrage, ou de maintien comportant un bras de serrage ou de maintien venant s'appliquer contreou maintenir l'extérieur d'une tôle de carrosserie ou d'une pièce de construction automobile.

La demande de brevet français 98.09549 du 27 juillet 1998 non publiée à la date de dépôt de la présente demande décrit un dispositif de centrage et de serrage, notamment de pièce pour carrosserie automobile, qui comporte un corps contenant un moyen d'actionnement apte à actionner en combinaison au moins un organe de serrage escamotable et au moins un organe de centrage contenant chaque organe de serrage escamotable à l'intérieur de cet organe de centrage. Chaque organe de serrage présente une extrémité formant crochet et s'étendant radialement extérieurement vers le bas. -

Ce dispositif décrit dans la demande de brevet français 98.09549 non publiée à la date de dépôt de la présente demande comporte un moyen mécanique de renvoi de mouvement. Ce moyen mécanique de renvoi de mouvement relie ledit moyen d'actionnement aux organes de centrage et de serrage, de manière à déplacer le moyen d'actionnement dans un sens opposé au sens de déplacement des organes de centrage et de serrage lors de l'actionnement du dispositif.

L'invention a pour but de perfectionner l'état de la technique connu, notamment le dispositif décrit dans la demande de brevet français 98.09549 du 27 juillet 1998 non publiée à la date de dépôt de la présente demande, en proposant un nouveau dispositif à commande électrique, apte à être relié directement à un automatisme électrique ou un automate programmable, ou un ordinateur muni d'une interface appropriée.

Un avantage important de l'invention est de constituer le dispositif selon l'invention comme un périphérique directement adaptable à un automatisme, un automate programmable ou un ordinateur muni d'une interface appropriée.

L'invention a pour objet un dispositif destiné au positionnement, au maintien ou au serrage de pièces, notamment de tôles de carrosserie automobile, comme défini par la revendication 1.

Selon d'autres caractéristiques avantageuses de l'invention :
- le moyen électrique d'actionnement est un moteur électrique apte à entraîner en rotation une partie d'actionnement permettant de transformer un mouvement de rotation en un mouvement de translation,
- le dispositif comporte un moyen de déblocage manuel agissant sur le mécanisme ou sur le moyen électrique d'actionnement,
- le moyen électrique d'actionnement coopère avec au moins une carte de commande apte à être solidarisée au dispositif,
- un boîtier contenant au moins une dite carte de commande coopère avec le moyen électrique d'actionnement
- le mécanisme déplaçable au moins partiellement en translation comporte une partie bloquée en rotation et déplaçable en translation par vissage ou dévissage d'une conformation coopérant avec un écrou d'entraînement ou un arbre fileté entraîné en rotation par le moyen électrique d'actionnement,
- le moyen électrique d'actionnement est un moteur électrique dont un bout d'arbre porte un pignon engrenant avec une roue dentée reliée audit mécanisme,
- la roue dentée reliée audit mécanisme est montée sur deux paliers disposés de part et d'autre de la roue dentée,
- selon une première variante de l'invention, ledit mécanisme est un mécanisme d'indexation ou "porte-pilote",
- selon une deuxième variante de l'invention, ledit mécanisme est un mécanisme d'immobilisation par pincement,
- selon une troisième variante non représentée de l'invention, ledit mécanisme est un mécanisme de serrage.

L'invention sera mieux comprise grâce à la description qui va suivre donnée à titre d'exemple non limitatif en référence aux dessins annexés dans lesquels :
- La figure 1 représente schématiquement une vue en perpective, avec arrachement partiel du corps, d'un dispositif selon l'invention.
- La figure 2 représente schématiquement une vue avec coupe partielle selon un plan contenant l'axe du moyen d'actionnement et un axe parallèle de déplacement du dispositifde la figure 1.
- La figure 3 représente schématiquement une vue en élévation avec coupe partielle analogue à la figure 2 d'un autre dispositif selon l'invention.
- La figure 4 représente schématiquement une vue en perpective, avec arrachement partiel du corps, d'un troisième mode de réalisation de dispositif selon l'invention.
- La figure 5 représente schématiquement une vue en élévation avec coupe partielle du dispositif selon l'invention de la figure 4, dans une position d'utilisation.
- La figure 6 représente schématiquement une vue en élévation avec arrachement partiel du dispositif de la figure 4 dans une position intermédiaire.
- La figure 7 représente schématiquement une vue en élévation avec arrachement partiel et coupe partielle du dispositif de la figure 4 en position d'escamotage.

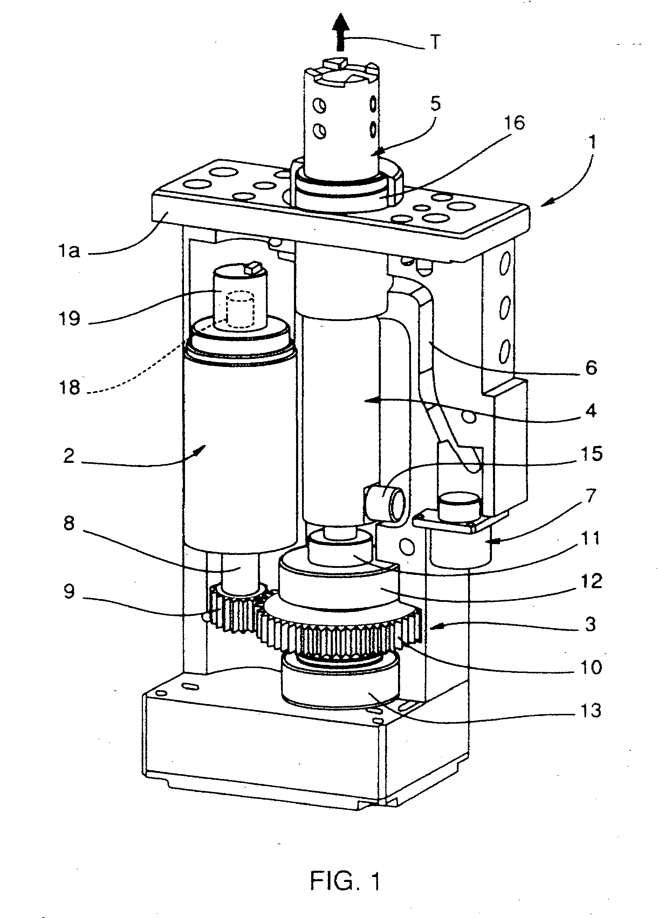

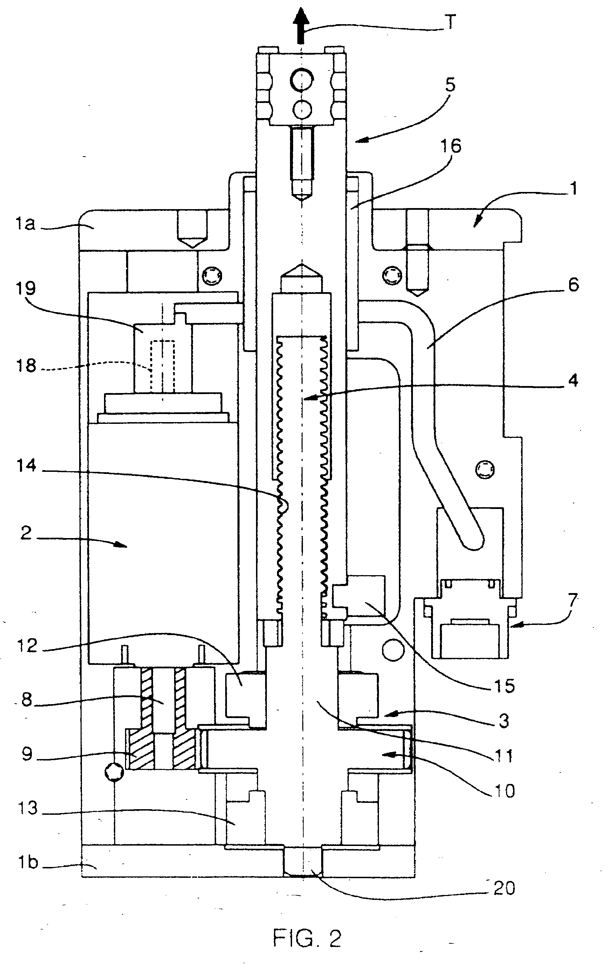

En référence aux figures 1 et 2, un premier mode de réalisation de l'invention comporte un corps 1 usiné pour recevoir à demeure et fixer par des moyens appropriés un moteur électrique 2 d'actionnement et un ensemble 3 d'entraînement relié à une tige filetée 4 d'actionnement, apte à actionner le déplacement d'un ensemble pilote 5, pour positionner une pièce de carrosserie non représentée.

Le corps 1 comporte une face supérieure la de montage sur un bâti fixe non représenté et présente une forme de boîtier recevant le moteur électrique 2 alimenté par un câble 6 de transmission de puissance et de signaux, relié à une source d'énergie ou de commande extérieure par l'intermédiaire d'une prise électrique 7 de transmission de puissance et de signaux de mesure et de commande.

Le bout d'arbre 8 du moteur électrique 2 reçoit un pignon 9 claveté apte à engrener avec une roue dentée 10 de l'ensemble d'actionnement 3. L'ensemble d'actionnement 3 comporte la tige filetée 4 solidaire d'une portion élargie 11 recevant à demeure la roue dentée 10. La portion élargie 11 est montée dans deux paliers 12 et 13 disposés de part et d'autre de la roue dentée 10.

L'ensemble mobile 5 "porte-pilote" comporte un taraudage intérieur à filet trapézoïdal 14 coopérant avec la tige filetée 4 d'entraînement. La partie inférieure de l'ensemble porte-pilote 5 comportant le taraudage 14 porte également un organe 15 anti-rotation, assurant le déplacement linéaire de l'ensemble porte-pilote 5 lors du vissage relatif de la tige filetée 4 dans le taraudage 14 formant écrou mobile en translation.

Un palier lisse 16 de coulissement est prévu pour la translation dans le sens de la flèche T de l'ensemble porte-pilote 5.

Dans le but d'obtenir une fabrication compacte et économique, ainsi qu'un effet anti-blocage lors d'un arrêt intempestif ou d'une coupure d'énergie accidentelle, on prévoit que le moteur électrique 2 est monté tête-bêche par rapport à l'ensemble porte-pilote 5, dont il assure le déplacement. On peut également prévoir avantageusement que le moteur électrique 2 comporte un deuxième bout d'arbre dépassant 18 inséré dans un codeur optique ou incréùental 19 permettant le pilotage en continu du moteur, et par conséquent du déplacement en translation T de l'ensemble porte-pilote 5.

En cas de blocage indésirable du mécanisme, cette disposition permet également d'actionner l'ensemble porte-pilote 5 directement, ou par l'intermédiaire de l'ensemble d'actionnement 3, soumis à une action mécanique sur une extrémité 20 accessible de l'extérieur du corps 1 sans démontage du corps 1.

L'extrémité 20 peut par exemple présenter une conformation en forme de vis, en empreinte hexagonale creuse ou toute autre empreinte en creux ou en relief apte à permettre une commande, manuelle, ou par l'intermédiaire d'un outil extérieur, de l'ensemble 3 et du porte-pilote 5 apte à se déplacer en translation dans le sens de la flèche T.

En outre, cette disposition permet dans ce cas de commander simultanément la rotation du rotor du moteur 2, et par conséquent la position angulaire du moteur 2 lié en rotation au déplacement de l'ensemble 3.

Ainsi, lors de la reprise de l'alimentation électrique, le positionnement du dispositif selon l'invention sera repérable avec exactitude par une centrale de commande intelligente reliée à la prise 7.

Cette disposition permet par conséquent une commande par ordinateur de dispositif selon l'invention en combinaison avec d'autres moyens utilisables en carrosserie automobile, en toute sécurité, du fait que la position instantanée du porte-pilote correspond à une position correspondante unique du moteur 2 pouvant être interprétée par un ordinateur, un automate programmable ou un moyen "intelligent" équivalent.

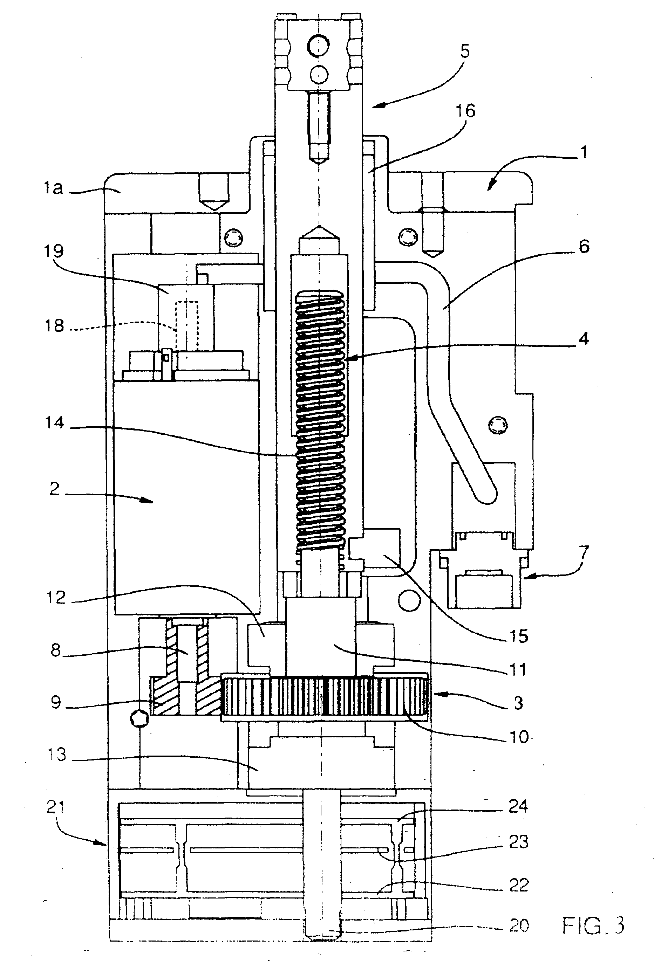

En référence à la figure 3, les éléments identiques ou fonctionnellement équivalents aux éléments des figures 1 et 2 sont repérés par des chiffres de référence identiques aux chiffres des figures 1 et 2.

Dans ce mode de réalisation, la plaque inférieure 1b du corps 1 du dispositif est remplacée par un boîtier 21 contenant des cartes et circuits de commande 22 à 24. Les cartes ou circuits de commande 22 à 24 permettent de constituer le dispositif selon l'invention en dispositif "intelligent", directement adressable par un ordinateur ou par un automate programmable. A cet effet, on peut également prévoir sur le bout d'arbre dépassant 20 de l'ensemble d'actionnement 3 des marques ou des stries caractéristiques aptes à être repérées par un codeur rotatif, de manière à vérifier l'absence de dents manquantes ou brisées sur le pignon 9 ou la roue dentée 10.

D'autres variantes peuvent être envisagées, dans lesquelles la prise 7 est disposée du côté des cartes de commande 22, 24 qui comportent avantageusement dans ce cas une carte de puissance supplémentaire.

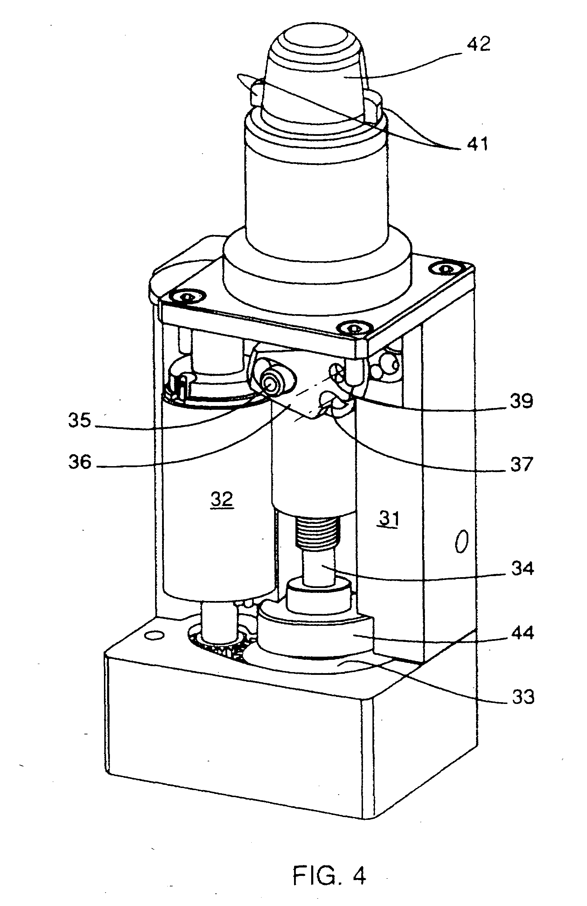

En référence aux figures 4 à 7, un autre mode de réalisation de l'invention comporte un corps 31 usiné pour recevoir un ensemble mobile et un moteur électrique 32.

Le moteur électrique 32 entraîne par un engrenage un écrou 33 denté extérieurement. L'écrou 33 mobile en rotation déplace une tige filetée 34 mobile en translation qui permet de déplacer en translation un ensemble de centrage et de serrage similaire à celui décrit dans la demande de brevet français 98.09549 non publiée du 27 juillet 1998. La tige filetée 34 en se déplaçant agit ainsi à la manière d'un piston provoquant un déplacement en sens inverse des organes de centrage et de serrage.

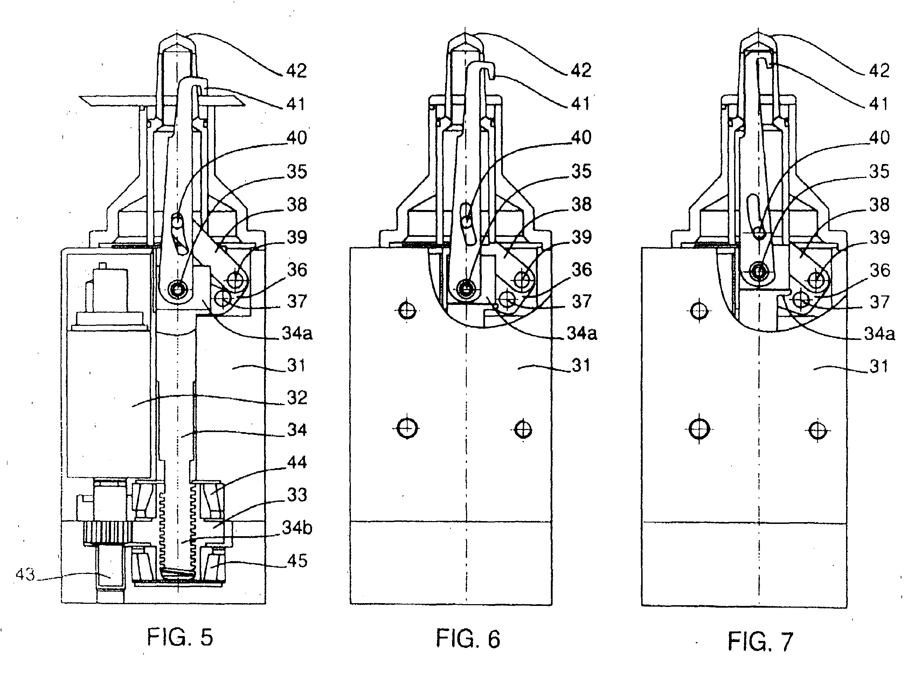

Dans la position de la figure 5, une tôle est serrée et centrée par le dispositif selon l'invention. Dans cette position, l'extrémité supérieure de la tige filetée 34 déplaçable en translation selon un montage anti-rotation est filetée à son extrémité inférieure 34b pour coopérer avec l'écrou 33. La pièce 34 comporte à son extrémité supérieure une tête 34a.

La tête 34a est articulée avec un jeu important sur un axe 35 traversant dont est solidaire une équerre 36, montée sur un axe 37 fixe dans le corps, et portant également une bielle 38 articulée en 39 sur l'équerre 36.

La bielle 38 comporte à son extrémité opposée à son axe d'articulation 39 un axe 40 de commande d'entrée et de sortie des organes de pincement 41 du dispositif.

Le fonctionnement du dispositif est analogue au fonctionnement exposé dans la demande de brevet français 98.09549 du 27 juillet 1998 qui est considérée comme incorporée par référence à la présente demande.

Ainsi, le déplacement de l'équerre 36 provoqué par la translation de la pièce 34 provoque à la fois la rentrée de l'organe 42 de centrage et l'escamotage du ou des organes 41 de pincement.

En effet, le fait d'intercaler la pièce de renvoi 36 pour commander les mouvements de l'organe de centrage 42 et de l'organe de serrage 41 produit un mouvement de translation de l'organe de centrage 42 opposé au mouvement de translation de la pièce 34 mobile en translation.

Ceci a pour conséquence le fait que l'axe d'articulation 35 et l'extrémité de l'organe de centrage 42 semblent se rapprocher lors du mouvement du dispositif effectué selon la séquence représentée aux figures 5 à 7.

Pour un fonctionnement plus détaillé du mécanisme correspondant, on se reportera à la demande de brevet français 98.09549 du 27 juillet 1998 non publiée, considéré comme incorporée par référence à la présente demande.

Dans ce mode de réalisation, selon l'invention, le moyen électrique 32 d'entraînement est monté tête-bêche par rapport à l'organe 34 d'actionnement qui provoque le fonctionnement du mécanisme du dispositif.

Cette disposition permet d'obtenir une fabrication compacte, simple et économique, tout en assurant un autoblocage en cas de rupture d'alimentation électrique ou d'arrêt intempestif.

Dans ce mode de réalisation, on peut prévoir un déblocage manuel par action sur une extrémité 43 de bout d'arbre dépassant du moteur électrique 32. Au lieu de monter la partie d'actionnement entraînée en rotation 33 dans des paliers tels que les paliers 12 et 13 des figures 1 et 2, on peut prévoir dans ce cas de monter la partie d'actionnement sur des roulements à rouleaux 44, 45, déterminés en fonction du rapport de démultiplication et des efforts engendrés d'actionnement, et disposés de part et d'autre de la roue dentée 33 formant écrou d'entraînement de l'actionneur 34 déplaçable en translation.

Les autres avantages de l'invention sont également conservés, à savoir la possibilité de compléter le dispositif représenté aux figures 4 à 7 par un boîtier "intelligent" non représenté permettant de constituer ce mode de réalisation comme périphérique d'un ordinateur, d'un automate programmable ou d'un objet équivalent.

L'invention décrite en référence à trois modes de réalisation particuliers n'y est nullement limitée, mais couvre au contraire toute modification de forme et toute variante de réalisation dans le cadre et l'esprit de l'invention.

Ainsi, l'invention peut également être appliquée aux dispositifs connus sous le nom de "serrages", dans lesquels un bras est actionné pour venir serrer ou maintenir une pièce de carrosserie ou un élément utile pour la construction automobile.

La compacité du dispositif permet également d'envisager la réduction des références de fabrication, en concevant un corps modulaire apte à recevoir un moteur électrique 2, ou 32, standard, pouvant être muni des équipements d'entraînement, et éventuellement d'un boîtier de commande "intelligent", tandis qu'une réservation est prévue pour monter à volonté des mécanismes assurant des fonctions de serrage, de positionnement, de maintien ou d'un autre mode d'immobilisation utile pour la fabrication automobile.

Le montage tête-bêche est particulièrement avantageux, ainsi que la disposition consistant à prévoir un boîtier "intelligent", pouvant être adapté moyennant des modifications simples à un corps modulaire de dispositif selon l'invention.

## Revendications

1. Dispositif de centrage, de positionnement, ou de serrage de pièces de carrosserie automobile, du type comportant un corps (1, 31) contenant un moyen d'actionnement (2, 32) et supportant des moyens de centrage (42), de positionnement ou de serrage de pièces de carrosserie automobile, notamment de tôle de carrosserie automobile, du type comportant un mécanisme déplaçable (5, 41) au moins partiellement en translation et un moyen électrique d'actionnement (2, 32), **caractérisé en ce que** le mécanisme et le moyen électrique (2, 32) d'actionnement sont montés tête-bêche, de manière à réduire les dimensions du corps (1, 31) du dispositif.

2. Dispositif selon la revendication 1, **caractérisé en ce que** le moyen électrique d'actionnement est un moteur (2, 32) électrique apte à entraîner en rotation une partie d'actionnement (4, 34) permettant de transformer un mouvement de rotation en un mouvement de translation.

3. Dispositif selon la revendication 1 ou la revendication 2, **caractérisé en ce que** le dispositif comporte un moyen (20, 43) de déblocage manuel agissant sur le mécanisme ou sur le moyen électrique d'actionnement.

4. Dispositif selon la revendication 1 ou la revendication 2, **caractérisé en ce que** le moyen électrique (2, 32) d'actionnement coopère avec au moins une carte de commande (22, 23, 24) apte à être solidarisée au dispositif.

5. Dispositif selon la revendication 4, comportant en outre au moins un boîtier (21) contenant au moins une dite carte de commande (22, 23, 24) coopérant avec le moyen électrique d'actionnement (2, 32).

6. Dispositif selon l'une quelconque des revendications précédentes, **caractérisé en ce que** le mécanisme déplaçable au moins partiellement en translation comporte une partie bloquée en rotation et déplaçable en translation par vissage ou dévissage d'une conformation coopérant avec un écrou (33) d'entraînement ou arbre fileté (4) entraîné en rotation par le moyen électrique (2, 32) d'actionnement.

7. Dispositif selon l'une quelconque des revendications 1 à 6, **caractérisé en ce que** le moyen électrique d'actionnement est un moteur électrique (2, 32) dont un bout d'arbre porte un pignon (9) engrenant avec une roue dentée (10, 33) reliée audit mécanisme.

8. Dispositif selon la revendication 7, **caractérisé en ce que** la roue dentée (10, 33) reliée audit mécanisme est montée sur deux paliers (11, 13 ; 44, 45) disposés de part et d'autre de la roue dentée (10, 33).

9. Dispositif selon la revendication 1, **caractérisé en ce que** ledit mécanisme est un mécanisme d'indexation ou "porte-pilote".

10. Dispositif selon la revendication 1, **caractérisé en ce que** ledit mécanisme est un mécanisme d'immobilisation par pincement.

11. Dispositif selon la revendication 1, **caractérisé en ce que** ledit mécanisme est un mécanisme de serrage.

## Claims

1. Centring, positioning, or clamping device for automobile body work parts, of the type comprising a body (1,31) containing an activating means (2, 32) and supporting centring, positioning or clamping means (42) for automobile bodywork parts, particularly automobile bodywork sheet metal, or the type comprising a mechanism (5, 41) which can move at least partially in translation and an electric activating means (2, 32) **characterised by** the fact that the mechanism and electric activating means (2, 32) are mounted top to bottom, in order to reduce the dimensions of the body (1, 31) of the device.

2. Device according to claim 1 **characterised by** the fact that the electric activating means is an electric motor (2, 32) which is capable of driving an activating part (4, 34) in rotation allowing a rotation movement to be transformed into a translation movement.

3. Device according to claim 1 or claim 2 **characterised by** the fact that the device comprises a manual release means (20 , 43) acting on the mechanism or on the electric activating means.

4. Device according to claim 1 or claim 2 **characterised by** the fact that the electric activating means (2, 32) cooperates with at least one command card (22, 23, 24) which is capable of being integral with the device.

5. Device according to claim 4 comprising moreover at least one box (21) containing at least one said command card (22, 23, 24) co-operating with the electric activating means (2, 32).

6. Device according to any of the previous claims **characterised by** the fact that the displaceable mechanism at least partially in translation comprises a part which is blocked in rotation and can be moved in translation by screwing or unscrewing a formation which co-operates with a drive nut (33) or threaded shaft (4) driven in rotation by the electric activating means (2, 32).

7. Device according to any of claims 1 to 6 **characterised by** the fact that the electric activating means is an electric motor (2, 32) one end of which carries a pinion (9) engaging with a toothed wheel (10, 33) linked to the said mechanism.

8. Device according to claim 7 **characterised by** the fact that the toothed wheel (10, 33) connected to the said mechanism is mounted on two bearings (11, 13; 44, 45) placed on either side of the toothed wheel (10, 33).

9. Device according to claim 1 **characterised by** the fact that the said mechanism is an indexing or "pilot-carrier" mechanism.

10. Device according to claim 1 **characterised by** the fact that the said mechanism is an immobilising mechanism using pinching means.

11. Device according to claim 1 **characterised by** the fact that the said mechanism is a clamping mechanism.

## Patentansprüche

1. Vorrichtung zum Zentrieren, Positionieren oder Spannen für Kraftfahrzeugkarosserieteile des Typs, der in einem Gehäuse (1, 31) eine Betätigungsanordnung (2, 32) aufweist und eine Anordnung (42) zum Zentrieren, Positionieren oder Spannen für Kraftfahrzeugkarosserieteile, insbesondere Kraftfahrzeugkarosseriebleche, trägt, wobei die Anordnung (42) einen wenigstens teilweise translatorisch bewegbaren Mechanismus (5, 41) und ein elektrisches Betätigungsmittel (2, 32) umfasst, **dadurch gekennzeichnet, dass** der Mechanismus und das elektrische Betätigungsmittel (2, 32) zur Verringerung der Abmessungen des Gehäuses (1, 31) Kopf an Fuß nebeneinander angeordnet sind.

2. Vorrichtung nach Anspruch 1, **dadurch gekennzeichnet, dass** das elektrische Betätigungsmittel ein Elektromotor (2, 32) ist, der geeignet ist, ein Betätigungsteil (4, 34), das die Umwandlung einer Drehbewegung in eine translatorische Bewegung bewirkt, anzutreiben.

3. Vorrichtung nach Anspruch 1 oder 2, **dadurch gekennzeichnet, dass** ein Handentriegelungselement (20, 43) vorgesehen ist, das auf den Mechanismus oder das elektrische Betätigungsmittel einwirkt.

4. Vorrichtung nach Anspruch 1 oder 2, **dadurch gekennzeichnet, dass** das elektrische Betätigungsmittel (2, 32) mit wenigstens einer Steuerkarte (22, 23, 24), die mit der Vorrichtung verbindbar ist, zusammenwirkt.

5. Vorrichtung nach Anspruch 4, **dadurch gekennzeichnet, dass** wenigstens ein weiteres Gehäuse (21) zur Aufnahme wenigstens einer Steuerkarte (22, 23, 24), die mit dem elektrischen Betätigungsmittel (2, 32) zusammenwirkt, vorgesehen ist.

6. Vorrichtung nach einem der vorhergehenden Ansprüche, **dadurch gekennzeichnet, dass** der wenigstens teilweise translatorisch bewegbare Mechanismus ein undrehbares, durch Auf- oder Abschrauben einer mit einer Mutter (33) oder einer Gewindewelle (4), die durch das elektrische Betätigungsmittel (2, 32) drehend angetrieben werden, zusammenwirkenden Ausbildung translatorisch bewegtes Bauteil umfasst.

7. Vorrichtung nach einem der Ansprüche 1 bis 6, **dadurch gekennzeichnet, dass** das elektrische Betätigungsmittel ein Elektromotor (2, 32) ist, dessen eines Wellenende ein Zahnrad (9) trägt, das mit einem mit dem Mechanismus verbundenen Zahnrad (10, 33) zusammenwirkt.

8. Vorrichtung nach Anspruch 7, **dadurch gekennzeichnet, dass** das mit dem Mechanismus verbundene Zahnrad (10, 33) in zwei auf je einer Seite des Zahnrades (10, 33) angeordneten Lagern (11, 13; 44, 45) gelagert ist.

9. Vorrichtung nach Anspruch 1, **dadurch gekennzeichnet, dass** es sich bei dem Mechanismus um einen Indexiermechanismus handelt.

10. Vorrichtung nach Anspruch 1, **dadurch gekennzeichnet, dass** es sich bei dem Mechanismus um einen Mechanismus zum Festhalten durch Einklemmen handelt.

11. Vorrichtung nach Anspruch 1, **dadurch gekennzeichnet, dass** es sich bei dem Mechanismus um einen Spannmechanismus handelt.
